# EUROPEAN PATENT SPECIFICATION

(11) **EP 3 192 728 B1**
(45) Date of publication and mention of the grant of the patent: **26.09.2018**
(21) Application number: 17151085.2
(22) Date of filing: 11.01.2017
(51) Int. Cl.: B62J 6/00, B62J 99/00

(54) **BICYCLE LIGHT**
FAHRRADBELEUCHTUNG
ECLAIRAGE DE BICYCLETTE

(30) Priority: 12.01.2016 US 201662277958 P
(43) Date of publication of application: 19.07.2017
(73) Proprietor: Rui Xing Electronics Limited, Hong Kong (HK)
(72) Inventor: Zhao, Rui Min Simon, Hong Kong (HK)
(74) Representative: Loo, Chi Ching

(56) References cited:
- EP-A1- 2 792 584
- WO-A1-2010/061651
- JP-A- 2013 252 811

## Description

### FIELD OF THE TECHNOLOGY

The present invention relates to an indicator light for a vehicle, and more particularly to a bicycle indicator light.

### BACKGROUND

Bicycle indicator lights currently available on the market have ordinary light source, which is insufficient in illumination and indication. These bicycle indicator lights can cause adverse effect on cyclists and other users on the road. In addition, these currently existing bicycle indicator lights need to be manually operated by the hands of a cyclist, and hence cause distraction while cycling. Therefore, there is a need to provide an improved bicycle indicator light which can automatically illuminate a large area of the road at night in order to make cycling more safe and convenient. Vehicle indicator light arrangements can be found in, for example, EP2792584 which shows the preamble of claim 1 and JP2013-252811.

### SUMMARY

According to an aspect of the present invention, there is provided a vehicle indicator light which may include:
a housing mountable on a vehicle;
left and right light-emitting elements provided on left and right sides of the housing at a front end thereof, the left light-emitting element oriented to illuminate an area on a left forward side of the vehicle, and the right light-emitting element oriented to illuminate an area on a right forward side of the vehicle;
a printed circuit board having a microcontroller unit, a gyro-specific integrated circuit, and a driver integrated circuit; and
a battery for supplying electricity to the left and right light-emitting elements and the printed circuit board;
wherein when the gyro-specific integrated circuit detects an inclination of the vehicle exceeding a predetermined angle (e.g. 5 degrees) to the left from an upright position of the vehicle, the gyro-specific integrated circuit sends a left inclination signal to the microcontroller unit which directs the driver integrated circuit to drive the left light-emitting element to glow automatically, and when the gyro-specific integrated circuit detects an inclination of the vehicle exceeding the predetermined angle to the right from the upright position, the gyro-specific integrated circuit sends a right inclination signal to the microcontroller unit which directs the driver integrated circuit to drive the right light-emitting element to glow automatically;
further comprising a mounting bracket assembly having a supporting end for supporting the housing and a coupling end for coupling with the vehicle, and
characterized in that the mounting bracket assembly comprises a retractable strap and a handlebar contact surface integrally formed with the retractable strap, the retractable strap being configured to wrap around a handlebar of the vehicle so that the handlebar contact surface is in direct contact with the handlebar of the vehicle and the vehicle indicator light is fixed on the handlebar.

The vehicle indicator light may be a bicycle indicator light. The vehicle indicator light may further include a main light-emitting element provided between the left and right light-emitting elements.

In one embodiment, each light-emitting element may be a light-emitting diode.

In one embodiment, the printed circuit board may further include a lithium battery management integrated circuit for charging the battery.

In one embodiment, a charging port may be provided on the housing and may be electrically connected with the battery.

In one embodiment, the printed circuit board may further include a regulator circuit for voltage regulation.

In one embodiment, the vehicle indicator light may further include a far-beam light-emitting element and a near-beam light-emitting element provided between the left and right light-emitting elements.

In one embodiment, the vehicle indicator light may further include a lens provided at the front end of the housing.

In one embodiment, the housing may include a top shell made of metal for heat dissipation and a bottom shell made of plastic.

In one embodiment, each light-emitting element may be mounted on a circuit board.

In one embodiment, the main light-emitting element, the left light-emitting element and the right light-emitting element may be positioned on a positioning member.

The mounting bracket assembly may include a guide rail on which the housing is mounted, the guide rail being provided on a support rotatably mounted on a rotary member, the rotary member being secured within a base by a pin, whereby the housing is rotatable about a vertical axis. The teeth may be provided underneath the support for selective engagement with the rotary member. A lower portion of the base may be provided with a transverse shaft with a turning and locking knob at one end thereof provided, whereby the housing is tiltable up or down about the transverse shaft.

Although the bicycle indicator light is shown and described with respect to certain embodiments, it is obvious that equivalents and modifications will occur to others skilled in the art upon the reading and understanding of the specification. The bicycle indicator light in the present application includes all such equivalents and modifications, and is limited only by the scope of the claims.

### BRIEF DESCRIPTION OF THE DRAWINGS

Specific embodiments of the bicycle indicator light will now be described by way of example with reference to the accompanying drawings wherein:
FIG. 1 is a side view of a bicycle indicator light according to a first embodiment of the present application.
FIG. 2 is a partially exploded view of the bicycle indicator light according to the first embodiment of the present application.
FIG. 2A is an exploded perspective view of the bicycle indicator light according to the first embodiment of the present application.
FIG. 3 is a front view of the bicycle indicator light according to the first embodiment of the present application.
FIG. 4 is a longitudinal cross sectional view of the bicycle indicator light according to the first embodiment of the present application.
FIG. 5 is a horizontal cross sectional view of the bicycle indicator light according to the first embodiment of the present application.
FIG. 6 is another exploded view of the bicycle indicator light according to the first embodiment of the present application.
FIG. 7 is a front perspective view of the bicycle indicator light according to the first embodiment of the present application.
FIG. 8 is a rear perspective view of the bicycle indicator light according to the first embodiment of the present application.
FIGS. 9(a)-9(f) show different views of the bicycle indicator light according to the first embodiment of the present application.
FIGS. 10 and 11 show circuit diagrams of the control circuits of the bicycle indicator light according to the first embodiment of the present application.
FIG. 12 is a flow chart of the working principle of the bicycle indicator light according to the first embodiment of the present application.
FIGS. 13(a)-13(f) show different views of the bicycle indicator light according to a second embodiment of the present application.
FIGS. 14 and 14A show circuit diagrams of the control circuits of the bicycle indicator light according to the second embodiment of the present application.
FIG. 15 is a flow chart of the working principle of the bicycle indicator light according to the second embodiment of the present application.

### DETAILED DESCRIPTION

Reference will now be made in detail to a preferred embodiment of the bicycle indicator light, examples of which are also provided in the following description. Exemplary embodiments of the bicycle indicator light are described in detail, although it will be apparent to those skilled in the relevant art that some features that are not particularly important to an understanding of the bicycle indicator light may not be shown for the sake of clarity.

Furthermore, it should be understood that the bicycle indicator light is not limited to the precise embodiments described below and that various changes and modifications thereof may be effected by one skilled in the art without departing from the scope of the protection. For example, elements and/or features of different illustrative embodiments may be combined with each other and/or substituted for each other within the scope of this disclosure and appended claims.

For illustration purposes, the terms such as "upper", "lower", "vertical", "horizontal", "top", "bottom", "left" or "right" appeared hereinafter relate to the invention as it is oriented in the drawings. It is understood that the invention may assume various positions, except where expressly specified to the contrary. Furthermore, it is understood that the specific devices shown in the drawings, and described in the following description, are simply exemplary embodiments of the invention. Hence, specific dimensions and other physical characteristics related to the embodiments disclosed hereinafter are not to be considered as limiting.

It should be noted that throughout the specification and claims herein, when one element is said to be "coupled" or "connected" to another, this does not necessarily mean that one element is fastened, secured, or otherwise attached to another element. Instead, the term "coupled" or "connected" means that one element is either connected directly or indirectly to another element or is in mechanical or electrical communication with another element.

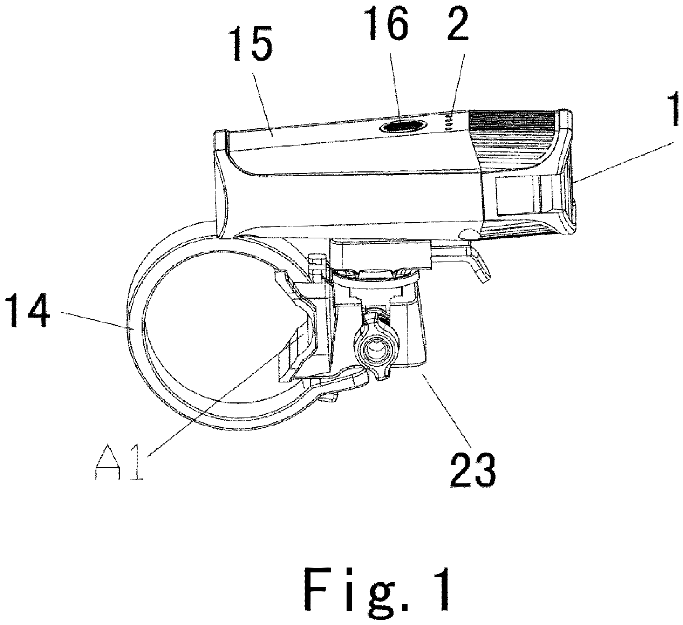

FIG. 1 is a side view of the bicycle indicator light according to a first embodiment of the present application. The bicycle indicator light may include a top shell 15 and a bottom shell 3. The top shell 15 and the bottom shell 3 together can define a housing for receiving therein a plurality of LED circuit boards 20A, 20B, 20C which will be described later in detail. A front end of the housing may be provided with a lens 1 for light transmission.

A push button 16 and an array of low battery indicators 2 may be provided on the top shell 15. The top shell 15 may be made of metal to facilitate heat dissipation so that heat generated inside the housing can be dissipated through the metal top shell 15. The bottom shell 3 may be made of plastic or other suitable material.

A mounting bracket assembly 23 can be employed to fix the bicycle indicator light on a bicycle. The mounting bracket assembly 23 may include a retractable strap 14 and a handlebar contact surface A1 integrally formed with the retractable strap 14. The retractable strap 14 can be used to wrap around a handlebar of a bicycle so that the handlebar contact surface A1 is in direct contact with the handlebar of the bicycle and the bicycle indicator light can be tightly fixed on the handlebar, or any other appropriate part of the bicycle. By means of the retractable strap 14 and the handlebar contact surface A1, the bicycle indicator light can be fixed on various kinds of handlebar of different bicycle models.

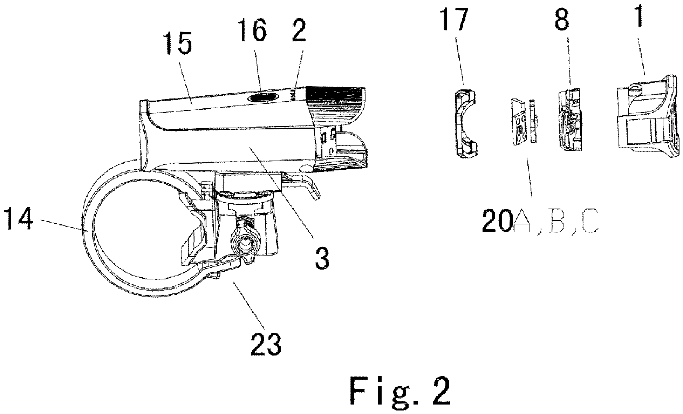

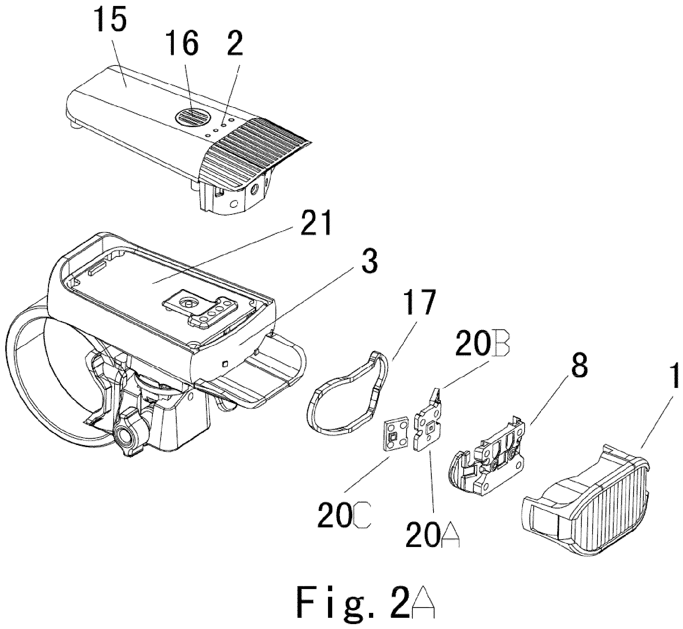

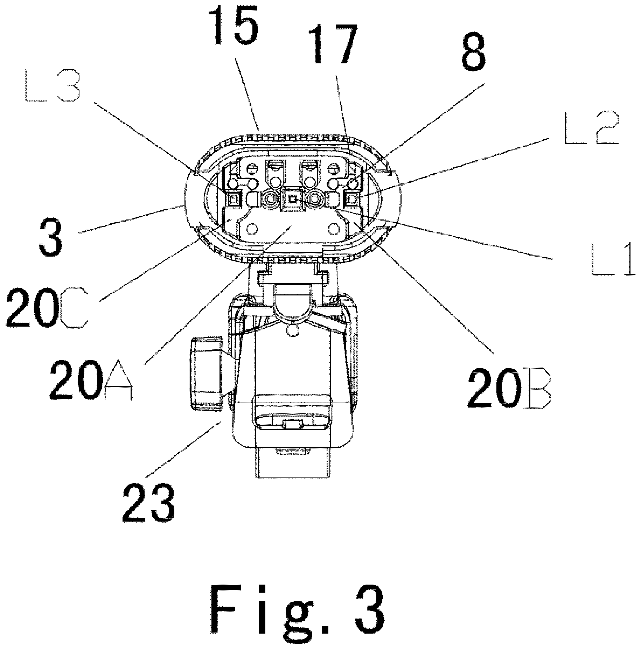

FIGS. 2 and 2A are exploded views of the bicycle indicator light of the first embodiment of the present application; and FIG. 3 is a front view of the bicycle indicator light of the first embodiment of the present application.

According to the illustrated embodiment, there are three LED lights, namely a main or middle LED light L1, a left LED light L2, and a right LED light L3. The left and right LED lights L2, L3 can be provided on the left and right side of the housing at a front end thereof. The main or middle LED light L1 can be provided between the left and right LED lights L2, L3. Although LEDs are adopted in the present embodiment, it is understood that any other suitable light-emitting elements can be used.

The three LED lights L1, L2, L3 can be provided on three LED circuit boards 20A, 20B, 20C respectively. An LED light positioning member 8 can be employed to space the three LED circuit boards 20A, 20B, 20C apart in a desired orientation. A waterproof gasket 17 can be provided along the joining edges of the lens 1 and the top and bottom shells 15, 3 so as to prevent water from leaking into the housing of the bicycle indicator light.

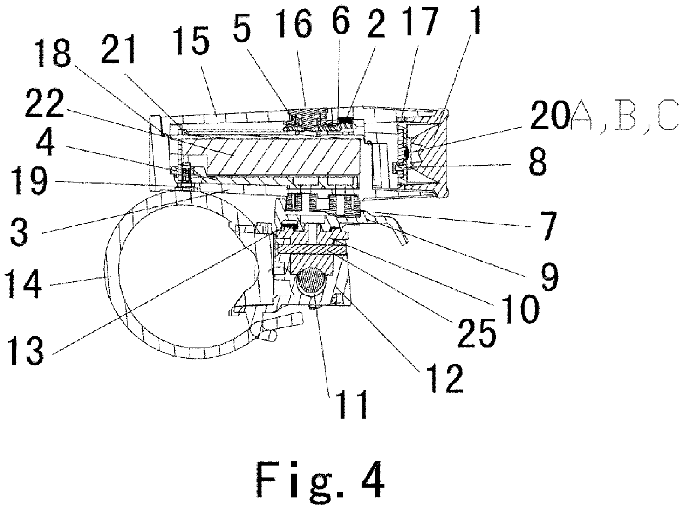

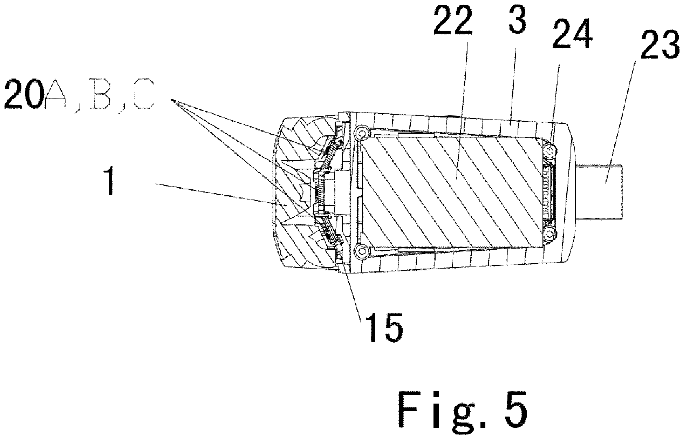

FIG. 4 is a longitudinal cross sectional view of the bicycle indicator light according to the first embodiment of the present application; and FIG. 5 is a horizontal cross sectional view of the bicycle indicator light according to the first embodiment of the present application.

It can be seen in FIG. 4 that the LED circuit boards 20A, 20B, 20C can be positioned on the LED light positioning member 8. The LED light positioning member 8 can be fixed on the top or bottom shell 15, 3 by screws 24, and disposed at a rear end of the lens 1.

A rechargeable battery 22 may be provided in the housing, which is defined by the top and bottom shells 15, 3. A waterproof gasket 18 may be provided along the joining edges of the top and bottom shells 15, 3 in order to prevent leakage of water into the housing. The rechargeable battery 22 can be supported on a battery support 4. A printed circuit board (PCB) 21 may be disposed above the battery 22. Heat generated from the battery 22 and the PCB 21 can be dissipated by the metal top shell 15. The PCB 21 can be electrically coupled with a charging port 19. The charging port 19 can be used to facilitate charging of the battery 22, for example, by a USB plug.

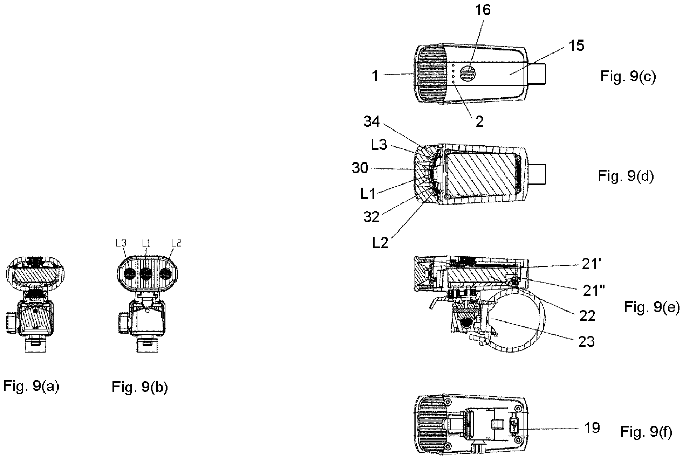

The PCB 21 may include a main PCB 21' and a sub-PCB 21", illustrated in FIG. 9(e) for carrying related control circuits such as a gyro-specific integrated circuit (IC) and a LED driver integrated circuit for driving the LED lights L1, L2, L3 to glow.

The bottom shell 3 of the housing may be mounted on a guide rail 7 which may be provided on a support 9. The support 9 can be rotatably mounted on a rotary member 10 secured within a base 12 by a pin 25. Teeth 13 may be provided underneath the support 9 for selective engagement with the rotary member 10. A transverse shaft 11 with a turning and locking knob at one end thereof can be provided at a lower portion of the base 12. The housing can be rotatable about a vertical axis by rotation of the support 9 on the rotary member 10, and can be tilted up or down about the transverse shaft 11.

The push button 16 may be sleeved around a plug 5 which may be supported on a push button support 6.

It can be seen in FIG. 5 that the lens 1 may include a plurality of conical lens cups which are disposed side by side in a row. In the first embodiment, there are three lens cups for the three LED lights L1, L2, L3. Left and right LED lights L2, L3 can achieve side illumination by desired angular orientation. Each LED light L1, L2, L3 may be mounted in the housing via an aluminum base plate 30, 32, 34, as shown in FIG. 9(d).

When the push button 16 is pressed, the middle or main LED light L1 is turned on by means of an output signal from a microcontroller unit (MCU) and through a transistor so as to drive the main LED light L1 to glow. Press the push button 16 again, the main LED light L1 is turned off. At this point, all the LED lights are turned off.

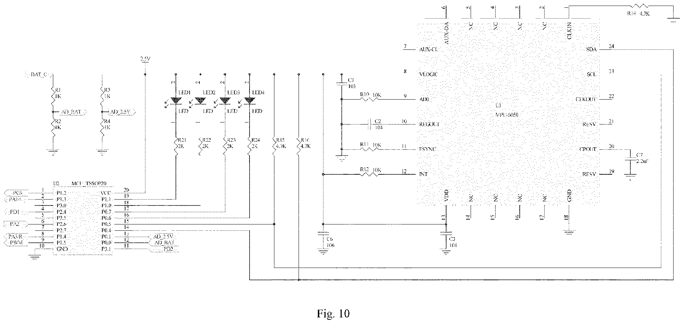

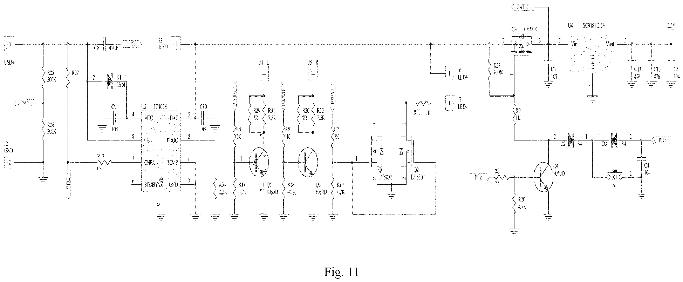

The MPU6050 gyro-specific IC can be combined with the MCU to generate left or right inclination signal, and then two other transistors can be used to drive the left LED light L2 or the right LED light L3 to glow (see FIGS. 10 and 11).

When a cyclist makes a left turn, the gyro-specific integrated circuit detects an inclination of the bicycle which exceeds a predetermined angle (e.g. 5 degrees) to the left from an upright position of the bicycle, then the gyro-specific integrated circuit generates and sends a left inclination signal to the microcontroller unit, which directs the LED driver integrated circuit to drive the left LED light L2 to glow automatically. The left LED light L2 can be a bright white or yellow LED that provides a large area of illumination on the left forward side of the bicycle, thereby increasing the area of the road that the cyclist can see at night.

When a cyclist makes a right turn, the gyro-specific integrated circuit detects an inclination of the bicycle which exceeds a predetermined angle (e.g. 5 degrees) to the right from the upright position of the bicycle, then the gyro-specific integrated circuit generates and sends a right inclination signal to the microcontroller unit, which directs the LED driver integrated circuit to drive the right LED light L3 to glow automatically. The right LED light L3 can be a bright white or yellow LED that provides a large area of illumination on the right forward side of the bicycle, thereby increasing the area of the road that the cyclist can see at night.

After making the left or right turn, the cyclist moves the handlebar back to the center. Then, the bicycle returns to its upright position and goes straight, and the left LED light L2 or the right LED light L3 automatically goes off.

In order to improve safety of cyclists, the bicycle indicator lights of the present application can be actuated in response to an automatic left or right inclination signal. Since the housing is mounted on the bicycle, the gyro-specific IC provided in the housing can detect the inclination of the bicycle as it makes a left or right turn.

Apart from the push button 16, the operation of the left and right LED lights L2, L3 is fully automatic. This automation can reduce the need for the cyclist to use his/her hands to operate the bicycle indicator lights while cycling. Thus, the cyclist can constantly keep his/her hands on the handlebar. The bicycle indicator lights of the present application are therefore safer than any bicycle indicator light on the market.

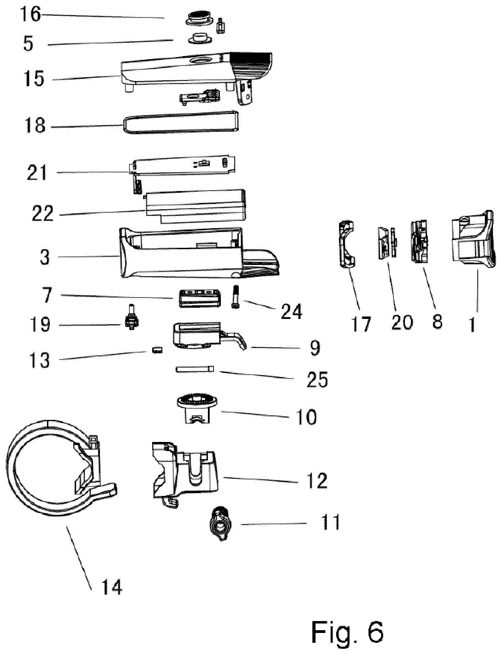

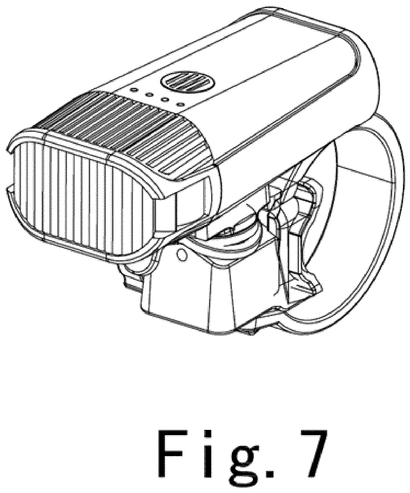

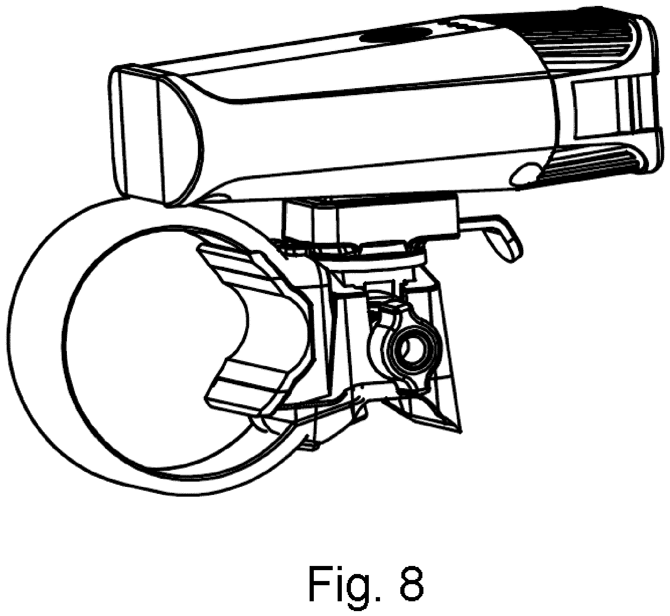

FIG. 6 is another exploded view of the bicycle indicator light according to the first embodiment of the present application. FIGS. 7, 8 and 9(a)-9(f) show different views of the bicycle indicator light according to the first embodiment of the present application.

FIGS. 10 and 11 show circuit diagrams of the control circuits of the bicycle indicator light according to the first embodiment of the present application. The control circuits of the bicycle indicator light of the first embodiment of the present application may include:
1: Microcontroller Unit (MCU): The microcontroller unit can be MCU0521. Its role is to trigger signals through the internal circuits, and drive the main LED light L1 to glow. In addition, the inclination signal from the gyro-specific IC can be processed by the MCU. The left and right inclination signals from the MCU drive the left and right LED lights L2, L3 to glow. At the same time, automatic indication of low battery and low voltage can be realized by the MCU.
2: MPU6050 Gyroscope: When the left or right inclination is greater than a predetermined angle (e.g. 5 degrees), the MPU6050 can detect the inclination and send an inclination signal to the MCU0521 for processing. The MCU0521 can output a signal to drive the left or right LED light L2, L3 to glow.
3: Regulator Circuit SC9162A-3: voltage of 4.2V from the lithium battery can be regulated by the regulator circuit to 3.3V voltage output to the MCU0521 and MP6050 as the operating voltage.
4: LED Driver Integrated Circuit: Small signal output from the MCU turns into amplified current by three transistors Q1, Q2, Q3 for driving the LED lights L1, L2, L3 to glow.
5: Lithium Battery Charge Management Integrated Circuit TP4056: The main role of TP4056 is to charge the lithium battery when it is out of electricity or when the cyclist needs to charge the battery. The circuit can generate small current charging in case of overcharge or over discharge. When the battery is fully charged to 4.2V, an output signal is sent to the MCU, which drives a green indicator light LED/G to glow.

During charging, TP4056 generates an output signal to the MCU, which drives a red indicator light LED/R to glow.

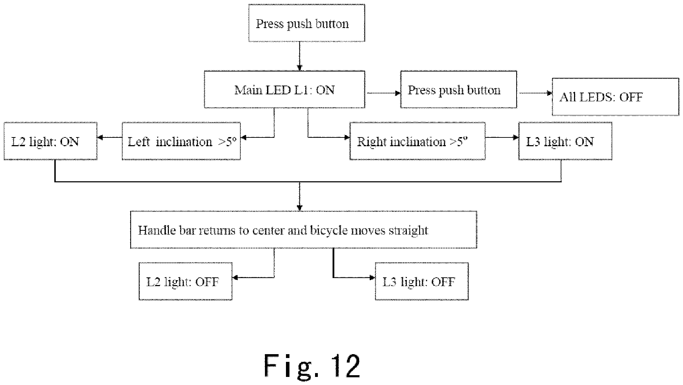

FIG. 12 is flow chart of the working principle of the bicycle indicator light according to the first embodiment of the present application.

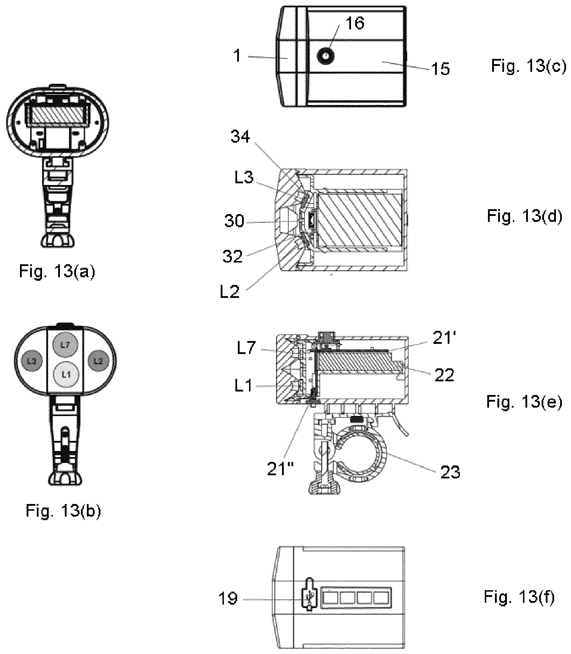

FIGS. 13(a)-13(f) show different views of the bicycle indicator light according to a second embodiment of the present application. The second embodiment is similar to the first embodiment, except that, in the second embodiment, there are four LED lights, namely a left LED light L2, a right LED light L3, a near-beam LED light L1, and a far-beam LED light L7. As depicted in FIG. 13(b), the near-beam LED light L1 and the far-beam LED light L7 may be provided between the left and right LED lights L2, and the near-beam LED light L1 may be provided below the far-beam LED light L7. The near-beam LED light L1 can be a white LED light.

When the push button 16 is pressed, the LED light L1 or L7 is turned on. The LED light L1 or L7 is turned on by means of an output signal from the 10th pin of the MCU and through a transistor Q2 so as to drive the LED light L1 or L7 to glow. Press the push button 16 again, the LED light L1 or L7 is turned off. The MPU6050 gyro-specific IC and the MCU can generate left or right inclination signal, and then transistors Q1 and Q3 can be used to drive the left LED light L2 or the right LED light L3 to glow.

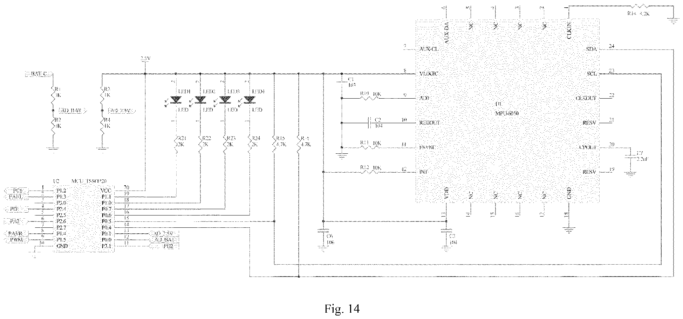

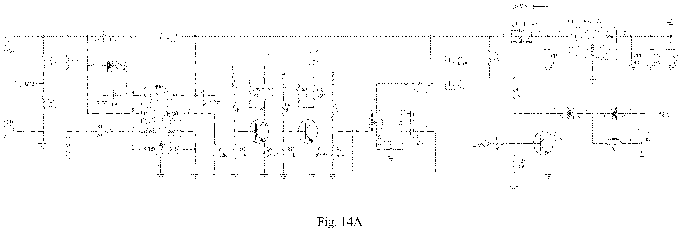

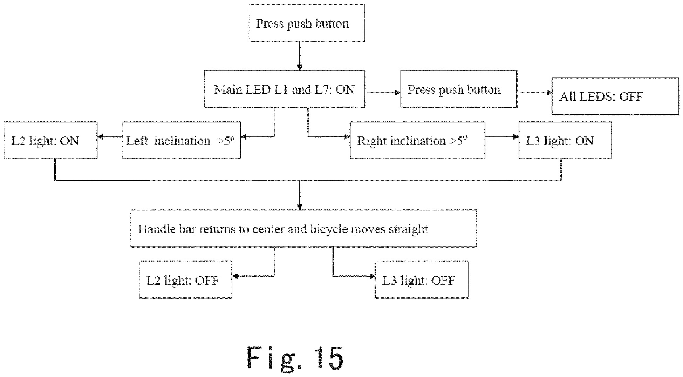

FIGS. 14 and 14A show circuit diagrams of the control circuits of the bicycle indicator light according to the second embodiment of the present application; and FIG. 15 is a similar flow chart of the working principle of the bicycle indicator light according to the second embodiment of the present application.

Although it has been described that the indicator light is provided on a bicycle, it is understood that the indicator light can be provided on or incorporated into other vehicles, including land vehicles such as motorbike and motorized bicycle; waterborne vehicles such as water motorcycle; and even airborne vehicles such as helicopter, etc.

While the bicycle indicator light has been shown and described with particular references to a number of preferred embodiments thereof, it should be noted that various other changes or modifications may be made without departing from the scope of the appended claims.

## Claims

1. A vehicle indicator light comprising:
(a) a housing mountable on a vehicle;
(b) left and right light-emitting elements (L2, L3) provided on left and right sides of the housing at a front end thereof, the left light-emitting element (L2) oriented to illuminate an area on a left forward side of the vehicle, and the right light-emitting element (L3) oriented to illuminate an area on a right forward side of the vehicle;
(c) a printed circuit board (21) comprising a microcontroller unit, a gyro-specific integrated circuit, and a driver integrated circuit; and
(d) a battery (22) for supplying electricity to the left and right light-emitting elements (L2, L3) and the printed circuit board (21);
(e) wherein when the gyro-specific integrated circuit detects an inclination of the vehicle exceeding a predetermined angle to the left from an upright position of the vehicle, the gyro-specific integrated circuit sends a left inclination signal to the microcontroller unit which directs the driver integrated circuit to drive the left light-emitting element (L2) to glow automatically, and when the gyro-specific integrated circuit detects an inclination of the vehicle exceeding the predetermined angle to the right from the upright position, the gyro-specific integrated circuit sends a right inclination signal to the microcontroller unit which directs the driver integrated circuit to drive the right light-emitting element (L3) to glow automatically;
further comprising a mounting bracket assembly (23) having a supporting end for supporting the housing and a coupling end for coupling with the vehicle, and
**characterized in that** the mounting bracket assembly (23) comprises a retractable strap (14) and a handlebar contact surface (A1) integrally formed with the retractable strap (14), the retractable strap (14) being configured to wrap around a handlebar of the vehicle so that the handlebar contact surface (A1) is in direct contact with the handlebar of the vehicle and the vehicle indicator light is fixed on the handlebar.

2. The vehicle indicator light as claimed in claim 1, further comprising a main light-emitting element (L1) provided between the left and right light-emitting elements (L2, L3).

3. The vehicle indicator light as claimed in any one of the preceding claims, wherein the printed circuit board (21) further comprises a lithium battery management integrated circuit for charging the battery (22).

4. The vehicle indicator light as claimed in any one of the preceding claims, wherein a charging port (19) is provided on the housing and is electrically connected with the battery (22).

5. The vehicle indicator light as claimed in any one of the preceding claims, wherein the printed circuit board (21) further comprises a regulator circuit for voltage regulation.

6. The vehicle indicator light as claimed in any one of the preceding claims, further comprising a far-beam light-emitting element (L7) and a near-beam light-emitting element (L1) provided between the left and right light-emitting elements (L2, L3).

7. The vehicle indicator light as claimed in any one of the preceding claims, further comprising a lens (1) provided at the front end of the housing.

8. The vehicle indicator light as claimed in any one of the preceding claims, wherein the housing comprises a top shell (15) made of metal for heat dissipation and a bottom shell (3) made of plastic.

9. The vehicle indiactor light as claimed in any one of the preceding claims, wherein each light-emitting element (L2, L3) is mounted on a circuit board (20A, 20B, 20C).

10. The vehicle indicator light as claimed in claim 2, wherein the main light-emitting element (L1), the left light-emitting element (L2) and the right light-emitting element (L3) are positioned on a positioning member (8).

11. The vehicle indicator light as claimed in any one of the preceding claims, wherein the mounting bracket assembly (23) comprises a guide rail (7) on which the housing is mounted, the guide rail (7) being provided on a support (9) rotatably mounted on a rotary member (10), the rotary member (10) being secured within a base (12) by a pin (25), whereby the housing is rotatable about a vertical axis.

12. The vehicle indicator light as claimed in claim 11, wherein teeth (13) are provided underneath the support (9) for selective engagement with the rotary member (10).

13. The vehicle indicator light as claimed in claim 12, wherein a lower portion of the base (12) is provided with a transverse shaft (11) with a turning and locking knob at one end thereof provided, whereby the housing is tiltable up or down about the transverse shaft (11).

## Patentansprüche

1. Fahrzeugkontrollleuchte, die Folgendes umfasst:
(a) ein an einem Fahrzeug montierbares Gehäuse;
(b) ein linkes und ein rechtes lichtemittierendes Element (L2, L3), die auf der linken und der rechten Seite des Gehäuses an einem Vorderende davon bereitgestellt sind, wobei das linke lichtemittierende Element (L2) dazu ausgerichtet ist, einen Bereich an einer linken vorderen Seite des Fahrzeugs auszuleuchten, und das rechte lichtemittierende Element (L3) dazu ausgerichtet ist, einen Bereich an einer rechten vorderen Seite des Fahrzeugs auszuleuchten;
(c) eine Leiterplatte (21), die ein Mikrocontroller-Einheit einen kreiselspezifischen integrierten Schaltkreis und einen integrierten Treiberschaltkreis umfasst; und
(d) eine Batterie (22) zur Elektrizitätsversorgung des linken und des rechten lichtemittierenden Elements (L2, L3) und der Leiterplatte;
(e) wobei, wenn der kreiselspezifische integrierte Schaltkreis eine Neigung des Fahrzeugs ermittelt, die einen vorbestimmten Winkel nach links aus einer aufrechten Position des Fahrzeugs überschreitet, der kreiselspezifische integrierte Schaltkreis ein Signal der Linksneigung an die Mikrocontroller-Einheit sendet, die den integrierten Treiberschaltkreis anweist, das linke lichtemittierende Element (L2) automatisch leuchten zu lassen, und wenn der kreiselfspezifische integrierte Schaltkreis eine Neigung des Fahrzeugs ermittelt, die einen vorbestimmten Winkel nach rechts aus einer aufrechten Position des Fahrzeugs überschreitet, der kreiselspezifische integrierte Schaltkreis ein Signal der Rechtsneigung an die Mikrocontroller-Einheit sendet, die den integrierten Treiberschaltkreis anweist, das rechte lichtemittierende Element (L3) automatisch leuchten zu lassen;
ferner umfassend eine Montageklammer-Baugruppe (23), die ein unterstützendes Ende aufweist, um das Gehäuse zu unterstützen, und ein Kupplungsende, um mit dem Fahrzeug gekoppelt zu werden, und
**dadurch gekennzeichnet, dass** die Montageklammer-Baugruppe (23) einen einziehbaren Riemen (14) und eine Lenkerkontaktfläche (A1) umfasst, die einstückig mit dem einziehbaren Riemen (14) ausgebildet ist, wobei der einziehbare Riemen (14) zum Wickeln um den Lenker des Fahrzeugs ausgestaltet ist, so dass die Lenkerkontaktfläche (A1) in direktem Kontakt mit dem Lenker des Fahrzeugs steht und die Kontrollleuchte auf dem Lenker befestigt ist.

2. Fahrzeugkontrollleuchte nach Anspruch 1, die ferner ein lichtemittierendes Hauptelement (L1) umfasst, das zwischen dem linken und dem rechten lichtemittierenden Element (L2, L3) bereitgestellt ist.

3. Fahrzeugkontrollleuchte nach einem der vorstehenden Ansprüche, wobei die Leiterplatte (21) ferner einen integrierten Schaltkreis zum Lithium-Batterie-Management zum Aufladen der Batterie (22) umfasst.

4. Fahrzeugkontrollleuchte nach einem der vorstehenden Ansprüche, wobei ein Ladeanschluss (19) auf dem Gehäuse bereitgestellt ist und elektrisch mit der Batterie (22) verbunden ist.

5. Fahrzeugkontrollleuchte nach einem der vorstehenden Ansprüche, wobei die Leiterplatte (21) ferner einen Regelkreis zur Spannungsregelung umfasst.

6. Fahrzeugkontrollleuchte nach einem der vorstehenden Ansprüche, die ferner ein lichtemittierendes Fernlicht-Element (L7) und ein lichtemittierendes Nahlicht-Element (L1) umfasst, die zwischen dem linken und dem rechten lichtemittierenden Element (L2, L3) bereitgestellt sind.

7. Fahrzeugkontrollleuchte nach einem der vorstehenden Ansprüche, die ferner eine Linse (1) umfasst, die an dem Vorderende des Gehäuses bereitgestellt ist.

8. Fahrzeugkontrollleuchte nach einem der vorstehenden Ansprüche, wobei das Gehäuse eine Oberschale (15) aus Metall zur Wärmeableitung und eine Unterschale (3) aus Plastik umfasst.

9. Fahrzeugkontrollleuchte nach einem der vorstehenden Ansprüche, wobei jedes lichtemittierende Element (L2, L3) auf einer Leiterplatte (20A, 20B, 20C) montiert ist.

10. Fahrzeugkontrollleuchte nach Anspruch 2, wobei das lichtemittierende Hauptelement (L1), das linke lichtemittierende Element (L2) und das rechte lichtemittierende Element (L3) auf einem Positionierungselement (8) positioniert sind.

11. Fahrzeugkontrollleuchte nach eine der vorstehenden Ansprüche, wobei die Montageklammer-Baugruppe (23) eine Führungsschiene (7) umfasst, auf die das Gehäuse montiert ist, wobei die Führungsschiene (7) auf einer Unterstützung (9) bereitgestellt ist, die drehbar auf einem Drehglied (10) montiert ist, das in einer Basis (12) durch einen Stift (25) befestigt ist, wodurch das Gehäuse um eine vertikale Achse drehbar ist.

12. Fahrzeugkontrollleuchte nach Anspruch 11, wobei Zähne (13) unterhalb der Unterstützung (9) zum wahlweisen Eingriff in das Drehglied (10) bereitgestellt sind.

13. Fahrzeugkontrollleuchte nach Anspruch 12, wobei ein unterer Abschnitt des Basis (12) mit einem Querschaft (11) mit einem Dreh- und Feststellknopf, der an einem Ende davon bereitgestellt ist, versehen ist, wodurch das Gehäuse nach oben oder unten um den Querschaft (11) kippbar ist.

## Revendications

1. Témoin lumineux de véhicule, comprenant :
(a) un boîtier qu'on peut monter sur un véhicule ;
(b) des éléments électroluminescents de gauche et de droite (L2, L3) situés sur les côtés de gauche et de droite du boîtier à une extrémité avant du véhicule, l'élément électroluminescent de gauche (L2) étant orienté pour éclairer une zone située sur un côté avant gauche du véhicule et l'élément électroluminescent de droite (L3) étant orienté pour éclairer une zone située sur un côté avant droit du véhicule ;
(c) une carte à circuit imprimé (21) comprenant une unité à microcontrôleur, un circuit intégré gyro-spécifique et un circuit intégré de commande ; et
(d) une batterie (22) permettant de fournir de l'électricité aux éléments électroluminescents de gauche et de droite (L2, L3) et à la carte à circuit imprimé (21) ;
(e) dans lequel, quand le circuit intégré gyro-spécifique détecte une inclinaison du véhicule dépassant un angle prédéfini vers la gauche à partir d'une position verticale du véhicule, le circuit intégré gyro-spécifique envoie un signal d'inclinaison à gauche à l'unité de microcontrôleur qui dirige le circuit intégré de commande pour amener l'élément électroluminescent de gauche (L2) à briller automatiquement et quand le circuit intégré gyro-spécifique détecte une inclinaison du véhicule dépassant l'angle prédéfini vers la droite de la position verticale, le circuit intégré gyro-spécifique envoie un signal d'inclinaison à droite à l'unité de microcontrôleur qui dirige le circuit intégré de commande pour amener l'élément électroluminescent de droite (L3) à briller automatiquement ;
comprenant en outre un ensemble formant un support de montage (23) comportant une extrémité de soutien permettant de soutenir le boîtier et une extrémité d'accouplement destinée à l'accouplement au véhicule et
**caractérisé en ce que** l'ensemble formant un support de montage (23) comprend une lanière rétractable (14) et une surface de contact avec le guidon (A1) formée d'une seule pièce avec la lanière rétractable (14), la lanière rétractable (14) étant conçue pour s'enrouler autour d'un guidon du véhicule de sorte que la surface de contact avec le guidon (A1) soit en contact direct avec le guidon du véhicule et que le témoin lumineux du véhicule soit fixé sur le guidon.

2. Témoin lumineux de véhicule selon la revendication 1, comprenant en outre un élément électroluminescent principal (L1) situé entre les éléments électroluminescents de gauche et de droite (L2, L3).

3. Témoin lumineux de véhicule selon l'une quelconque des revendications précédentes, dans lequel la carte à circuit imprimé (21) comprend en outre un circuit intégré de gestion de la batterie au lithium, permettant de charger la batterie (22).

4. Témoin lumineux de véhicule selon l'une quelconque des revendications précédentes, dans lequel un port de charge (19) est prévu sur le boîtier et est électriquement relié à la batterie (22).

5. Témoin lumineux de véhicule selon l'une quelconque des revendications précédentes, dans lequel la carte à circuit imprimé (21) comprend en outre un circuit régulateur destiné à la régulation en tension.

6. Témoin lumineux de véhicule selon l'une quelconque des revendications précédentes, comprenant en outre un élément électroluminescent à faisceau à longue portée (L7) et un élément électroluminescent à faisceau à courte portée (L1) prévus entre les éléments électroluminescents de gauche et de droite (L2, L3).

7. Témoin lumineux de véhicule selon l'une quelconque des revendications précédentes, comprenant en outre une lentille (1) prévue à l'extrémité avant du boîtier.

8. Témoin lumineux de véhicule selon l'une quelconque des revendications précédentes, dans lequel le boîtier comprend une coque supérieure (15) constituée de métal destinée à la dissipation de chaleur et une coque inférieure (3) constituée de matière plastique.

9. Témoin lumineux de véhicule selon l'une quelconque des revendications précédentes, dans lequel chaque élément électroluminescent (L2, L3) est monté sur une carte de circuit (20A, 20B, 20C).

10. Témoin lumineux de véhicule selon la revendication 2, dans lequel l'élément électroluminescent principal (L1), l'élément électroluminescent de gauche (L2) et l'élément électroluminescent de droite (L3) sont positionnés sur un élément de positionnement (8).

11. Témoin lumineux de véhicule selon l'une quelconque des revendications précédentes, dans lequel l'ensemble formant un support de montage (23) comprend un rail de guidage (7) sur lequel est monté le boîtier, le rail de guidage (7) étant prévu sur un soutien (9) monté avec liberté de rotation sur un élément rotatif (10), l'élément rotatif (10) étant attaché dans une base (12) par une goupille (25), moyennant quoi le boîtier peut tourner autour d'un axe vertical.

12. Témoin lumineux de véhicule selon la revendication 11, dans lequel des dents (13) sont prévues au-dessous du soutien (9) destinées à une mise en prise sélective avec l'élément rotatif (10).

13. Témoin lumineux de véhicule selon la revendication 12, dans lequel une partie inférieure de la base (12) est conçue avec un arbre transversal (11) de sorte qu'un bouton de rotation et de verrouillage est prévu à une de ses extrémités, moyennant quoi le boîtier peut s'incliner en montant ou en descendant autour de l'arbre transversal (11).
